# EUROPÄISCHE PATENTSCHRIFT

(11) **EP 1 784 848 B1**
(45) Veröffentlichungstag und Bekanntmachung des Hinweises auf die Patenterteilung: **24.02.2010**
(21) Anmeldenummer: 05776792.3
(22) Anmeldetag: 11.08.2005
(51) Int. Cl.: H01H 71/02

(54) **VERBINDUNGSELEMENT ZUR VERBINDUNG ZWEIER MIT IHRER BREITSEITE NEBENEINANDER ANGEORDNETER INSTALLATIONSGERÄTE**
CONNECTING ELEMENT FOR CONNECTING TWO INSTALLATION UNITS THAT ARE POSITIONED SIDE BY SIDE WITH ADJACENT BROAD SIDES
ELEMENT DE LIAISON POUR RELIER DEUX APPAREILS D'INSTALLATION DISPOSES LES UNS A COTE DES AUTRES DANS LEUR LARGEUR

(30) Priorität: 02.09.2004 DE 102004042426
(43) Veröffentlichungstag der Anmeldung: 16.05.2007
(73) Patentinhaber: ABB AG, 68309 Mannheim (DE)
(72) Erfinder: ORBAN, Alexander, 69469 Weinheim (DE); SELLNER, Rudolf, 68766 Hockenheim (DE)
(86) Internationale Anmeldenummer: PCT/EP2005/008703
(87) Internationale Veröffentlichungsnummer: WO 2006/024377

(56) Entgegenhaltungen:
- FR-A- 2 614 132
- GB-A- 2 016 632
- US-A1- 2004 032 702

## Beschreibung

Die Erfindung betrifft ein Verbindungselement gemäß dem Oberbegriff des Anspruches 1.

Elektrische Leitungsschutzschalter sind einpolig oder mehrpolig ausgebildet. Zur Erzielung einer mehrpoligen Anordnung wird eine der Anzahl der Pole oder Phasen entsprechende Anzahl von Leitungsschutzschalterpolen mit ihren Breitseiten aneinander gereiht und miteinander verbunden. Diese Verbindung erfolgt meist durch Nietverbindungen. Es sind auch Spreizverbinder bekannt, die einem zylindrischen Abschnitt aufweisenden, an dessen Stirnseite beidseitig in entgegengesetzten Richtungen vorspringende Spreizarme angeformt sind, die im montierten Zustand mit radialen Nasen hinter Rücksprünge in jedem Pol greifen; siehe US 2004/0032702, GB 2016 632 und FR 2614 132.

Diese Spreizverbinder sind nur für solche Leitungsschutzschalter, die mindestens eine Normmodulbreite von 17,5 mm aufweisen, geeignet.

Die Verbindungselemente gemäß den Parallelanmeldungen sind geeignet für solche Leitungsschutzschalter, die mindestens eine Normmodulbreite von 17, 5 mm aufweisen.

Selbstverständlich können auch Fehlerstromschutzschalter auf diese Weise miteinander verbunden werden, oder Leitungsschutzschalter mit Fehlerstromschutzschaltern.

Häufig werden an Leitungs- oder Fehlerstromschutzschalter Hilfsschalter angesetzt, die lediglich eine halbe Modulbreite besitzen. Zur Befestigung derartiger Hilfsschalter mit geringer Modulbreite werden als Verbindungselemente meist Nietverbindungen verwendet, da die Länge des Nietes einfach festzulegen ist. Die Herstellung einer Nietverbindung ist, da spezielle Werkzeuge einzusetzen sind, aufwendig. Wegen der zum Vermieten aufzubringenden Kräfte kann es vorkommen, dass die Gehäuse der Installationsgeräte beschädigt werden.

Aufgabe der Erfindung ist es, ein Verbindungselement gemäß dem Oberbegriff des Anspruches 1 zu schaffen, mit dem auf einfache Weise auch Schalter mit geringer Modulbreite als die Normmodulbreite an ein anderes Installationsgerät angesetzt werden kann.

Diese Aufgabe wird erfindungsgemäß durch die Merkmale des Anspruches 1 gelöst.

Erfindungsgemäß besitzt das Verbindungselement einen Grundkörperabschnitt, an dessen einem Ende zwei federnde Arme parallel zueinander vorspringen, an deren freien Enden auf sich diametral gegenüberliegenden Mantellinie radial nach außen vorspringenden Nase angeformt sind. An dessen den Armen entgegengesetztem Ende befindet sich eine umlaufende, als Kopf dienende Leiste. An den Innenseiten der Arme im Bereich der Nase sind auch Mittel angeordnet, die zur Begrenzung des Zusammendrückens der Arme beim Verrastvorgang dienen. Nach Verrastung greifen, dass der Kopf hintere einen Rücksprung an einem und die Nase der Arme hinter einen Rücksprung am anderen Schaltgerät.

Dadurch, dass an dem Grundkörperabschnitt lediglich auf einer Seite die beiden federnden Arme angeordnet sind, wogegen am anderen Ende der Kopf sitzt, ist die Gesamtlänge des Verbindungselementes verringert, so dass auf einfache Weise ein Installationsgerät mit einer geringeren Breite als die Normmodulbreite von 17,5 mm an ein anderes Installationsgerät angeschlossen und daran befestigt werden kann.

In bevorzugter Weise wird das Verbindungselement so montiert, dass sich der Kopf im Installationsgerät mit verringerter Modulbreite befindet.

Die Mittel, die zur Begrenzung des Zusammendrückens der Arme beim Verrastvorgang dienen, können durch eine die Enden der Arme miteinander verbindende, federnd verformbare Querplatte gebildet sein, die zusätzlich den Vorteil bietet, dass sie federnd die Arme in Spreizrichtung beaufschlagt.

Darüber hinaus kann ein Federelement vorgesehen sein, welches gemäß einer besonders vorteilhaften Ausgestaltung der Erfindung eine Z-Form aufweist, deren einer Schenkel an einer Kante des einen Armes und deren Torschenkel an der entgegengesetzt liegenden Kante des Armes angeschlossen sind. Gemeint sind hier die Längskanten der Arme.

Es besteht auch die Möglichkeit, an wenigstens einer der sich gegenüberliegenden Innenfläche der Arme im Bereich der Nase wenigstens einen Vorsprung anzuformen, der zur Richtung der Innenfläche des anderen Armes vorspringt und zur Begrenzung der Bewegung der Arme gegeneinander dient.

Wenn an der Innenfläche jedes Armes jeweils ein Vorsprung angeformt ist, der zur gegenüberliegenden Innenfläche vorspringt, sind die Vorsprünge in besonders vorteilhafter Weise gegeneinander versetzt, so dass sie beim Zusammendrücken aneinander vorbei gleiten.

Die aneinander vorbei gleitenden Flanken, können auch eine Schrägfläche bilden und parallel zueinander verlaufen, so dass die beiden Vorsprünge aufeinander aufgleiten.

Die Nasen, mit denen eine Verrastung erfolgt, können eine Sägezahnform aufweisen, deren steiler Fläche zum Kopf hin gerichtet ist. Beide Sägezahnflächen können konusförmig ausgebildet sein.

Anhand der Zeichnung, in der einige Ausführungsbeispiele der Erfindung dargestellt sind, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Schnittansicht durch eine Zuordnung eines Leitungsschutzschalters und zwei Hilfsschaltern,
- Fig. 2: eine perspektivische Ansicht einer ersten Ausführungsform eines Verbindungselementes,
- Fig. 3: eine Schnittansicht durch eine zweite Ausführungsform des Verbindungselementes,
- Fig. 4: eine Ansicht gemäß Pfeilrichtung IV der Fig. 3,
- Fig. 5: eine Teilansicht einer dritten Ausführungsform eines Verbindungselementes, in der Darstellung gemäß Fig. 4 und
- Fig. 6 und 7: eine vierte Ausführungsform eines erfindungsgemäßen Verbindungselementes in der Darstellung gemäß Fig. 4, in zwei unterschiedlichen Einbaustellungen.

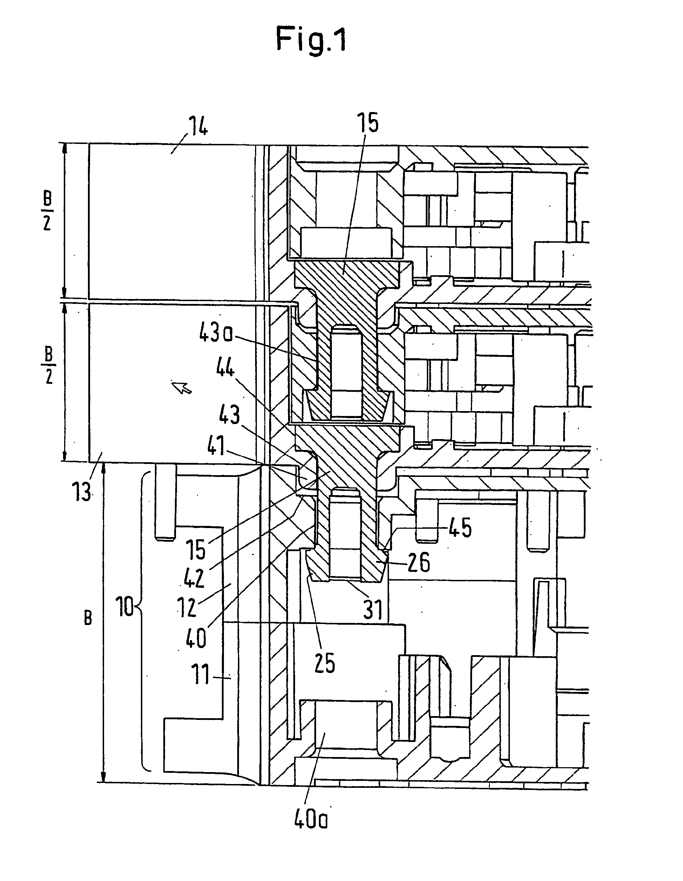

Es sei nun Bezug genommen auf die Fig. 1.

An einem Leitungsschutzschalter 10, deren Gehäuse aus zwei Gehäusehalbschalen 11, 12, die mit ihren freien Kanten gegeneinander gelegt sind, besteht, sind zwei Hilfsschalter 13 und 14 mit ihren Breitseiten angereiht; die beiden Hilfsschalter 13 und 14 besitzen die halbe Modulbreite B/2 der Modulbreite B des Leitungsschutzschalters 10.

Der Hilfsschalter 13 ist an dem Leitungsschutzschalter 10 mittels eins Verbindungselementes 15 und der Hilfsschalter 14 am Hilfsschalter 13 mit einem gleich ausgebildeten Verbindungselement, das deshalb die gleiche Bezugsziffer 15 aufweist, angeschlossen und daran befestigt.

Die inneren Komponenten sowohl des Leitungsschutzschalters 10 als auch der beiden Hilfsschalter 13 und 14 sind für die Erfindung nicht von Bedeutung.

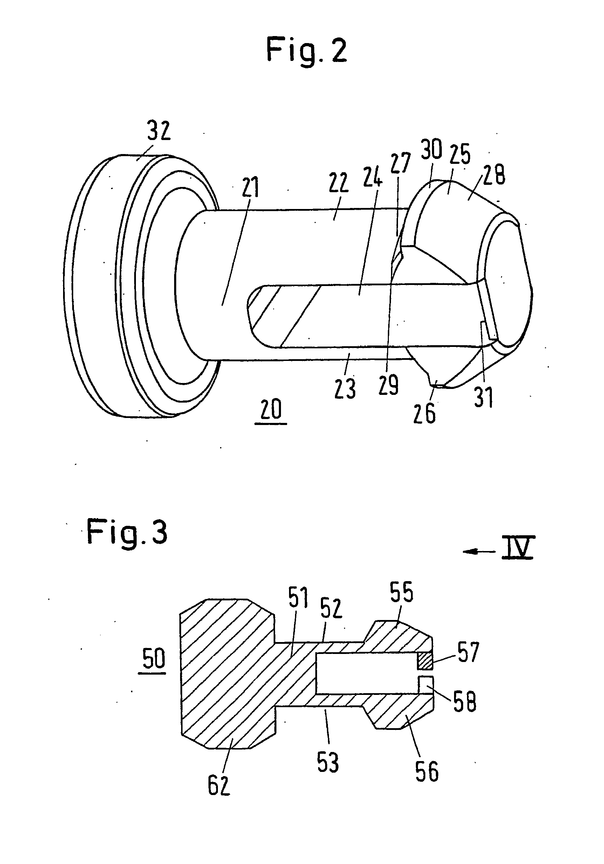

Es sei nun Bezug genommen auf die Fig. 2, in der ein Verbindungselement einer ersten Ausführungsform dargestellt ist. Das Verbindungselement besitzt die Bezugsziffer 20 und weist eine Grundkörper 21 auf, an dessen einer Stirnfläche zwei parallel zueinander verlaufene und in axialer Richtung vom Grundkörper vorspringende Arme 22 und 23 angeformt sind, die mittels eines Längsschlitzes 24 voneinander getrennt sind. Der Grundkörper 21, auch Grundkörperabschnitt 21 genannt, ist zylinderförmig und deshalb sind die Außenflächen der Arme 22 und 23 ebenfalls zylindersegmentförmig.

An den freien Enden der Arme 22 und 23 sind diametral einander gegenüberliegend nach außen vorspringende Rastnasen 25 und 26 angeformt, die im Längsschnitt eine Art Sägezahnform bilden, wobei die Sägezahnwandung 27, die dem Grundkörperabschnitt 21 zugewandt ist, einen steileren Winkel zur Längsachse des Verbindungselementes 20 einnimmt als die entgegengesetzt liegende Schrägfläche 28. Die Schrägfläche 27 und 28 entsprechen je einer Konusform; zwischen den Schrägflächen 27 und 28 befindet sich eine radial verlaufende Kreisringbogenflächen 29 und daran anschließend eine Zylinderbogenfläche 30, so dass der Übergang zwischen der Schrägfläche 27 und der Schrägfläche 28 gestuft ist.

Am freien Ende sind die beiden Arme 22, 23 mittels einer Abdeckplatte 31 verbunden, die so dünn bemessen ist, dass sie sich dann, wenn die Arme 22, 23 gegeneinander gedrückt werden, federnd ausbiegt.

An dem den Armen 22, 23 entgegengesetzten Ende des Grundkörpers 21 ist eine umlaufende Leiste 32 angeformt, die einen Kopf darstellt; der Außendurchmesser der Leiste 32 oder des Kopfes 32 ist größer als der Außendurchmesser der Zylinderbogenfläche 30 der Nase 25, 26.

Das Verbindungselement 20 der Fig. 2 entspricht identisch dem Verbindungselement 15.

Damit das Verbindungselement 20 (oder auch 15) montiert werden kann, besitzt die Schale 12 des Leitungsschutzschalters eine zylindrische Durchbrechung 40, deren Innendurchmesser dem Außendurchmesser der Arme 22 und 23 sowie des Grundkörpers 21 entspricht. An der dem Leitungsschutzschalter 10 zugewandten Breitseite besitzt der Hilfsschalter 13 bzw. das Gehäuse des Hilfsschalters 13 einen senkrecht zur Breitseite verlaufenden kragenartigen Vorsprung 41 nach außen, der in einen daran angepassten Rücksprung 42 am Gehäuse des Leitungsschutzschalters 10 eingreifen kann; der Vorsprung oder der Kragen 41 umgibt eine Durchgangsöffnung 43, deren Innendurchmesser dem Innendurchmesser der Öffnung 40 entspricht; an der Innenseite des Gehäuses des Hilfsschalters 13 geht diese Durchbrechung 43 stufig in eine kreisförmige Vertiefung 44 über, in die der Kopf 32 hineinpasst; die Tiefe dieser Vertiefung entspricht der axialen Erstreckung des Kopfes 32.

Zur Montage wird demgemäss der Hilfsschalter 13 auf die Breitseite des Leitungsschutzschalters 10 aufgesetzt und sodann in die Vertiefung des Gehäuses des Hilfsschalters 13 das Verbindungselement 15 bzw. 20 eingesetzt, soweit, bis die Nasen 25, 26 hinter einen Rücksprung 45 greifen, der die Durchbrechung 40 umgibt und der bezogen auf die Durchbrechung 40 radial ausgerichtet ist. Damit sitzt der Kopf 32 in der Vertiefung 44. Die Konusfläche 27 legt sich gegen die Innenkante des Rücksprunges 45 an, wodurch aufgrund der Konusfläche 27 eine Fixierung des Hilfsschalters 13 am Leitungsschutzschalter 10 bewirkt wird und Toleranzen ausgeglichen werden. Während des Einsetzvorganges gleiten die Nasen 25, 26 durch die Durchbrechung 40 hindurch, wobei die Arme 22, 23 gegeneinander gedrückt werden und sich dabei die Querplatte 31 verformt. Nachdem die Arme 22, 23 hinter den Rücksprung 45 eingerastet sind bzw. sich dahinter befinden, drückt die Querplatte 31 die beiden Arme wieder federnd auseinander.

In gleicher Weise ist auch der Hilfsschalter 14 am Hilfsschalter 13 befestigt.

Bei der Ausführung nach der Fig. 1 besitzt das Gehäuse des Leitungsschutzschalters 10 die beiden Halbschalen 11 und 12, die im Bereich der Verrastung ähnlich ausgebildet sind, wobei die Halbschale 11 eine Durchbrechung 40a in ihrer Breitseitenwand aufweist, die der Durchbrechung 40 entspricht und die deshalb die gleiche Bezugsziffer mit dem Index a erhalten hat. In gleicher Weise ist auch das Hilfsschaltergehäuse zusätzlich zur Durchbrechung 43 mit einer Durchbrechung 43a versehen, die auch der Durchbrechung 40 entspricht.

Die Fig. 3 zeigt eine zweite Ausführungsform der Erfindung. Ein Verbindungselement 50 besitzt einen dem Grundkörper 21 entsprechenden Grundkörper 51, an dem zwei Arme 52 und 53, die parallel zueinander verlaufen, angeformt sind; an den Enden der Arme 52, 53 befinden sich Nasen 55, 56, die den Nasen 25, 26 entsprechen; darüber hinaus besitzt das Verbindungselement 50 auch einen Kopf 62, der dem Kopf 32 entspricht.

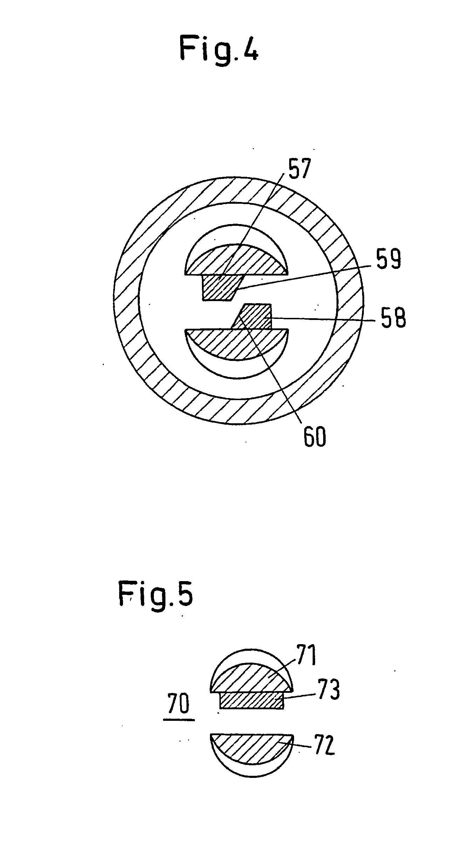

An den Innenflächen der Enden der Arme 52 und 53 sind senkrecht dazu angeformte Anschläge 57 und 58 angeformt, die bezogen auf die Längsachse seitlich gegeneinander versetzt sind, wie aus der Fig. 4 ersichtlich ist. Die beiden Vorsprünge 57 und 58 besitzen Seitenflanken 59 und 60, die bezogen auf die Arme 52, 53 schräg ausgerichtet sind, wobei sie parallel zueinander verlaufen. Beim Einsetzen des Verbindungselementes 50 in die Durchbrechung 43, 40 werden die Arme 52, 53 gegeneinander gedrückt, und die Seitenflanken 59, 60 gleiten aufeinander auf; durch diese Ausgestaltung gemäß Fig. 4 wird jedenfalls erreicht, dass die beiden Arme 52, 53 nur soweit zusammen gedrückt werden können, bis die Vorsprünge 57, 58 entweder aufeinander aufgleiten oder gegen die jeweiligen Innenflächen des gegenüber liegenden Armes zum Anliegen kommen.

Bei der Ausführung gemäß Fig. 5 besitzt das Verbindungselement 70 zwei Arme 71, 72, die im Prinzip den Armen 22, 23 entsprechen. Anstatt der Vorsprünge 57 und 58 befindet sich lediglich an einem Arm 71 ein Vorsprung 73, der sich beim Zusammendrücken der beiden Arme gegen die Innenfläche des anderen Armes 72 anlegt.

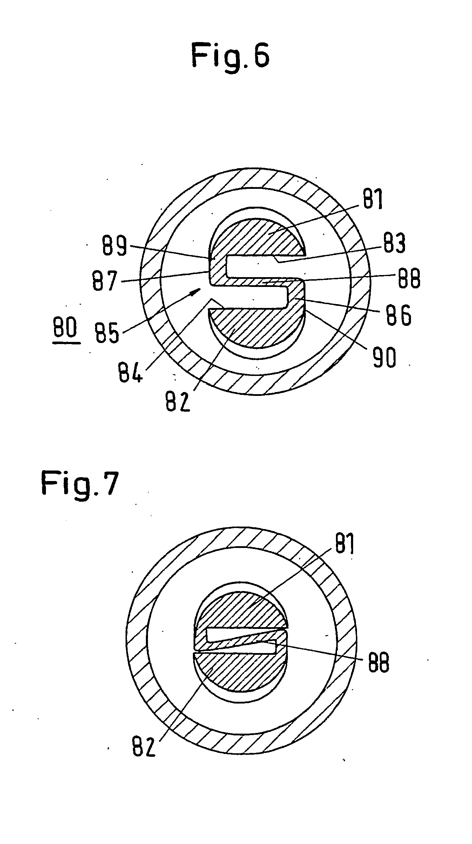

Bei der Ausführung gemäß den Figuren 6 und 7, die ein Verbindungselement 80 in der in Fig. 4 gezeigten Ansicht darstellen, sind zwei Arme 82 vorgesehen, die den Armen 22, 23 entsprechen und - wie diese - parallel verlaufende, gegeneinander gerichtete Innenflächen 83, 84 aufweisen. Zwischen den beiden Innenflächen 83, 84 befindet sich anstelle der Vorsprünge 57 und 58 bzw. des Vorsprunges 73 ein Federelement 85, welches eine Z-Form aufweist; der eine freie Schenkel 86 der Z-Form schließt an der Innenfläche 84 und der andere freie Schenkel 87 an der Innenfläche 83 jeweils senkrecht an; der Steg 88 zwischen den beiden Schenkeln verläuft parallel zu den Innenflächen 83, 84. Aus der Fig. 6 ist ersichtlich, dass der Schenkel 87 an einem Rand 89 des Armes 81 und der Schenkel 86 am entgegengesetzt liegenden Rand 90 des Armes 82 anschließt.

Die Fig. 7 zeigt die Ausführungsform gemäß Fig. 6 in dem Augenblick, in dem die Nasen die Bohrungen oder Durchbrechungen 43, 40 durchgleiten; dabei nähern sich die Innenflächen 83, 84 aneinander, bis die Schenkel 86, 87 auf den jeweils entgegengesetzt liegenden Innenflächen 83, 84 aufliegen und der Steg 88 schräg zu den Innenflächen 83, 84 verläuft und dabei das Verbindungselement 85 federnd verformt ist. Damit kann das Verbindungselement 85 die beiden Arme 81, 82 wieder auseinander drücken, wenn die Endstellung erreicht ist.

Die Querplatte 31 sowie die Vorsprünge 57, 58 oder der Vorsprung 73 sowie die Feder 85 sind an den freien Enden der Arme angeformt und zwar jeweils auf einer oder beider aufeinander zuweisenden Innenflächen der Arme 22, 23; 52, 53; 71, 72; 81, 82.

## Patentansprüche

1. Verbindungselement zur Verbindung zweier mit ihrer Breitseite nebeneinander angeordneter Installationsgeräte (10, 13, 14), insbesondere Leitungsschutzschalter, Fehlerstromschutzschalter und dergleichen, von denen wenigstens eines (13, 14) eine gegenüber der Normalmodulbreite von 17.5mm eines Installationsgerätes verringerte Modulbreite aufweist, beispielsweise zur Verbindung eines Hilfsschalters mit einem Leitungsschutzschalter oder Fehlerstromschutzschalter oder eines Hilfsschalters mit einem Motorschutzschalter oder eines weiteren Hilfsschalters an dem Hilfsschalter, **dadurch gekennzeichnet, dass** das Verbindungselement (15, 20, 50, 70, 80) einen Grundkörperabschnitt (21, 51) aufweist, an dessen einem Ende zwei federnde Arme (22, 23; 52, 53) axial vom Grundkörper (21, 51) parallel zueinander vorspringen, an deren freien Enden auf sich diametral gegenüber liegenden Mantellinien radial nach außen vorspringende Nasen (25, 26; 55, 56) angeformt sind und an dessen den Armen (22, 23; 52, 53; ...) entgegengesetztem Ende eine umlaufende, als Kopf dienende Leiste (32, 62) angeordnet ist, und dass an den Innenseiten der Arme (22, 23; 52, 53; ...) im Bereich der Nasen Mittel (31, 57, 58; 73; 85) angeordnet sind, die zur Begrenzung des Zusammendrückens der Arme beim Verrastvorgang dienen, dergestalt, dass der Kopf hinter einen Rücksprung an einem und die Nase der Arme hinter einen Rücksprung am anderen Schaltgerät greifen.

2. Verbindungselement nach Anspruch 1, **dadurch gekennzeichnet, dass** der Kopf (32, 62) sich im Installationsgerät (13, 14) mit verringerter Modulbreite befindet.

3. Verbindungselement nach einem der Ansprüche 1 und 2, **dadurch gekennzeichnet, dass** die Mittel durch eine die Enden der Arme (22, 23) miteinander verbindende, federnd verformbare Querplatten (31) gebildet sind, die zusätzlich federnd die Arme in Spreizrichtung beaufschlagt.

4. Verbindungselement nach einem der vorherigen Ansprüche, **dadurch gekennzeichnet, dass** zwischen den freien Enden der Arme (81, 82) ein Federelement (85) vorgesehen ist.

5. Verbindungselement nach Anspruch 4, **dadurch gekennzeichnet, dass** das Federelement (85) eine Z-Form aufweist, deren einer Schenkel (87) an einer Längskante (89) des einen Armes (81) und deren anderer Schenkel (86) an der entgegengesetzt liegenden Längskante (90) des anderen Armes (82) angeschlossen sind.

6. Verbindungselement nach einem der vorherigen Ansprüche 1 bis 3, **dadurch gekennzeichnet, dass** an wenigstens einer der sich gegenüber liegenden Innenflächen der Arme (52, 53; 71) im Bereich der Nasen (55, 56) wenigstens ein Vorsprung (57, 58; 73) vorgesehen ist, der zur Innenfläche des anderen Armes vorspringt und zur Begrenzung der Bewegung der Arme gegeneinander dient.

7. Verbindungselement nach Anspruch 6, **dadurch gekennzeichnet, dass** an der Innenfläche jedes Armes (51, 52) jeweils ein Vorsprung (57, 58) angeformt ist, der zur gegenüberliegenden Innenfläche vorspringt, und dass die Vorsprünge (57, 58) gegeneinander versetzt sind.

8. Verbindungselement nach Anspruch 7, **dadurch gekennzeichnet, dass** die aneinander vorbeigleitenden Flanken (59, 60) der Vorsprünge als Schrägfläche ausgebildet sind und parallel zueinander verlaufen.

9. Verbindungselement nach einem der vorherigen Ansprüche, **dadurch gekennzeichnet, dass** die Nasen (25, 26) eine Sägezahnform aufweisen, wobei die steilere Fläche (27) zum Kopf (32) hin gerichtet ist.

10. Verbindungselement nach Anspruch 9, **dadurch gekennzeichnet, dass** die Sägezahnfläche (27, 28) jeweils Konusflächen sind.

## Claims

1. A connecting element for connecting two installation units (10, 13, 14), especially miniature circuit breakers, residual-current circuit breakers and the like, which are positioned side by side adjacent to one another with their broad sides and of which at least one (13, 14) has a module width which is reduced as compared with the standard module width of 17.5 mm of an installation unit, e.g. for connecting an auxiliary switch with a miniature circuit breaker or a residual-current circuit breaker or an auxiliary switch with a motor circuit breaker or a further auxiliary switch on the auxiliary switch, **characterized in that** the connecting element (15, 20, 50, 70, 80) has a main body section (21, 51) at the one end of which two resilient arms (22, 23; 52, 53) protrude axially from the main body (21, 51) parallel with respect to one another, at the free ends of which noses (25, 26; 55, 56) which protrude radially to the outside are formed on diametrically opposite surface lines and on whose end opposite of the arms (22, 23; 52, 53; ....) a circumferential strip (32, 62) which is used as a head is arranged, and means (31, 57, 58; 73; 85) are arranged on the insides of the arms (22, 23; 52, 53; ....) in the region of the noses which are used for limiting the compression of the arms during the latching process, such that the head grips behind a setoff on the one switching unit and the nose of the arms grips behind a setoff on the other switching unit.

2. A connecting element according to claim 1, **characterized in that** the head (32, 62) is disposed in the installation unit (13, 14) with the reduced module width.

3. A connecting element according to one of the claims 1 and 2, **characterized in that** the means are formed by a resiliently deformable transversal plate (31) which connects the ends of the arms (22, 23) with each other and which additionally pressurizes the arms in the spreading direction in a resilient manner.

4. A connecting element according to one of the preceding claims, **characterized in that** a spring element (85) is provided between the free ends of the arms (81, 82).

5. A connecting element according to claim 4, **characterized in that** the spring element (85) has the shape of a Z whose one leg (87) is connected to a longitudinal edge (89) of the one arm (81) and whose other leg (86) is connected to the oppositely disposed longitudinal edge (90) of the other arm (82).

6. A connecting element according to one of the preceding claims 1 to 3, **characterized in that** at least one projection (57, 58; 73) is provided on at least one of the opposite disposed inside surfaces of the arms (52, 53; 71) in the region of the noses (55, 56), which projection protrudes towards the inside surface of the other arm and is used for limiting the movement of the arms against one another.

7. A connecting element according to claim 6, **characterized in that** one projection (57, 58) is each formed on the inside surface of each arm (51, 52), which projection protrudes towards the opposite inside surface, and the projections (57, 58) are offset with respect to one another.

8. A connecting element according to claim 7, **characterized in that** the flanks (59, 60) of the projections which slide past one another are arranged as oblique surfaces and extend parallel with respect to each other.

9. A connecting element according to one of the preceding claims, **characterized in that** the noses (25, 26) have the shape of a saw tooth, with the steeper surface (27) facing towards the head (32).

10. A connecting element according to claim 9, **characterized in that** the saw-tooth surfaces (27, 29) are each conical surfaces.

## Revendications

1. Élément de montage pour le montage de deux appareils d'installation (10, 13, 14) juxtaposés sur leur côté large, en particulier des disjoncteurs de protection de ligne, disjoncteurs à courant de fuite ou similaires, dont au moins un (13, 14) présente une largeur de module réduite par rapport à la largeur de module normale de 17,5 mm d'un appareil d'installation, par exemple pour l'assemblage d'un contacteur auxiliaire avec un disjoncteur de protection de ligne ou un disjoncteur à courant de fuite ou d'un contacteur auxiliaire avec un disjoncteur de protection de moteur ou d'un autre contacteur auxiliaire avec le contacteur auxiliaire, **caractérisé en ce que** l'élément de montage (15, 20, 50, 70, 80) présente une partie formant corps de base (21, 51) à une extrémité de laquelle deux bras élastiques (22, 23 ; 52, 53) font saillie dans le sens axial à partir du corps de base (21, 51) parallèlement l'un à l'autre, leurs extrémités libres portant formées sur des lignes d'enveloppe diamétralement opposées des ergots (25, 26 ; 55, 56) en saillie vers l'extérieur dans le sens radial, et dont l'extrémité opposée aux bras (22, 23 ; 52, 53 ; ...) porte un bandeau (32, 62) circonférentiel servant de tête, et **en ce qu'**il est prévu sur les faces intérieures des bras (22, 23 ; 52, 53 ; ...) au niveau des ergots des moyens (31, 57, 58 ; 73 ; 85) servant à limiter le rapprochement des bras lors de l'opération d'emboîtement, de telle façon que la tête se mette en prise derrière une saillie sur un appareil de commutation et l'ergot des bras derrière une saillie sur l'autre appareil de commutation.

2. Élément de montage selon là revendication 1, **caractérisé en ce que** la tête (32, 62) se trouve dans l'appareil d'installation (13, 14) ayant une largeur de module réduite.

3. Élément de montage selon l'une des revendications 1 et 2, **caractérisé en ce que** les moyens sont formés par une plaque transversale (31) déformable de façon élastique reliant les extrémités des bras (22, 23), qui sollicite en outre les bras de façon élastique dans le sens du déploiement.

4. Élément de montage selon l'une des revendications précédentes, **caractérisé en ce qu'**un élément formant ressort (85) est prévu entre les extrémités libres des bras (81, 82).

5. Élément de montage selon la revendication 4, **caractérisé en ce que** l'élément formant ressort (85) présente une forme de Z dont une barre (87) se raccorde à un bord longitudinal (89) d'un bras (81) et l'autre barre (86) au bord longitudinal (90) de l'autre bras (82) situé en face.

6. Élément de montage selon l'une des revendications 1 à 3, **caractérisé en ce qu'**il est prévu sur au moins une des surfaces intérieures des bras (52, 53 ; 71) se faisant face, au niveau des ergots (55, 56), au moins une saillie (57, 58 ; 73) qui dépasse vers la surface intérieure de l'autre bras et sert à limiter le déplacement des bras l'un vers l'autre.

7. Élément de montage selon la revendication 6, **caractérisé en ce qu'**il est prévu formée sur la surface intérieure de chaque bras (51, 52) une saillie (57, 58) qui dépasse vers la surface intérieure lui faisant face, et **en ce que** les saillies (57, 58) sont décalées l'une par rapport à l'autre.

8. Élément de montage selon la revendication 7, **caractérisé en ce que** les flancs (59, 60) des saillies glissant l'un sur l'autre sont conformés comme des surfaces obliques et sont parallèles l'un à l'autre.

9. Élément de montage selon l'une des revendications précédentes, **caractérisé en ce que** les ergots (25, 26) sont en forme de dents de scie, la surface la plus inclinée (27) étant orientée vers la tête (32).

10. Élément de montage selon la revendication 9, **caractérisé en ce que** les surfaces en dents de scie (27, 28) sont des surfaces de cône.
